# EUROPEAN PATENT APPLICATION

(11) **EP 3 200 374 A1**
(43) Date of publication of application: **02.08.2017**
(21) Application number: 17153374.8
(22) Date of filing: 26.01.2017
(51) Int. Cl.: H04L 1/00

(54) **DEVICE AND NETWORK FOR HANDLING DATA TRANSMISSION**

(30) Priority: 28.01.2016 US 201662287909 P; 24.01.2017 US 201715413425
(71) Applicant: HTC Corporation, Taoyuan City 330 (TW)
(72) Inventor: Meng, Ling-San, Taoyuan City 330 (TW)
(74) Representative: Ljungberg, Robert

(57) **Abstract**

A network for handling data transmission comprises a storage unit for storing instructions and a processing circuit coupled to the storage unit. The processing circuit is configured to execute the instructions stored in the storage unit. The instructions comprise determining a first error control coding (ECC) scheme for downlink (DL) data according to a first transport block (TB) size; encoding the DL data into encoded DL data according to the first ECC scheme; and transmitting the encoded DL data to a communication device.

## Description

### Cross Reference To Related Applications

This application claims the benefit of U.S. Provisional Application No. 62/287,909, filed on Jan. 28, 2016, which is incorporated herein by reference.

### Background of the Invention

### 1. Field of the Invention

The present invention relates to a communication device and a method used in a wireless communication system, and more particularly, to a communication device and method of handling data transmission in a wireless communication system.

### 2. Description of the Prior Art

Latency reduction is considered as a target for improving user experience regarding a wireless communication system, and may be realized by shortening a transmission time interval (TTI) defined in the 3rd Generation Partnership Project (3GPP) standard to a shorter TTI. A subframe size and a transport block (TB) size defined in the 3GPP standard may be shortened to a shortened subframe size and a smaller TB size accordingly.

A plurality of error control coding (ECC) schemes are operated for correcting errors occurred to data transmission in the wireless communication system. However, one or more of the ECC schemes cannot be operated properly, if the shorter TTI, the shortened subframe size or the smaller TB size is realized for the latency reduction. For example, a turbo coding scheme may not be operated properly because a large information block size (i.e., larger TB size) is needed for a system performance approaching a channel capacity. Thus, how to handle the data transmission performed with the ECC schemes is an important problem to be solved.

### Summary of the Invention

The present invention therefore provides a method and related communication device for handling data transmission to solve the abovementioned problem.

A network of handling data transmission comprises a storage unit for storing instructions and a processing circuit coupled to the storage unit. The processing circuit is configured to execute the instructions stored in the storage unit. The instructions comprise determining a first error control coding (ECC) scheme for downlink (DL) data according to a first transport block (TB) size; encoding the DL data into encoded DL data according to the first ECC scheme; and transmitting the encoded DL data to a communication device.

A communication device of handling data transmission comprises a storage unit for storing instructions and a processing circuit coupled to the storage unit. The processing circuit is configured to execute the instructions stored in the storage unit. The instructions comprise receiving encoded downlink (DL) data from a network; determining a first error control coding (ECC) scheme according to a first transport block (TB) size of the encoded DL data; and decoding the encoded DL data according to the first ECC scheme.

A network of handling data transmission comprises a storage unit for storing instructions and a processing circuit coupled to the storage unit. The processing circuit is configured to execute the instructions stored in the storage unit. The instructions comprise configuring a first shortened subframe size to a communication device; determining a first error control coding (ECC) scheme for downlink (DL) data according to the first shortened subframe size; encoding the DL data into encoded DL data according to the first ECC scheme; and transmitting the encoded DL data in a first shortened subframe to the communication device.

A communication device of handling data transmission comprises a storage unit for storing instructions and a processing circuit coupled to the storage unit. The processing circuit is configured to execute the instructions stored in the storage unit. The instructions comprise receiving a configuration configuring a first shortened subframe size from a network; receiving encoded downlink (DL) data from the network in a first shortened subframe; determining a first error control coding (ECC) scheme according to the first shortened subframe size of the encoded DL data; and decoding the encoded DL data according to the first ECC scheme.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a flowchart of a process according to an example of the present invention.

### Detailed Description

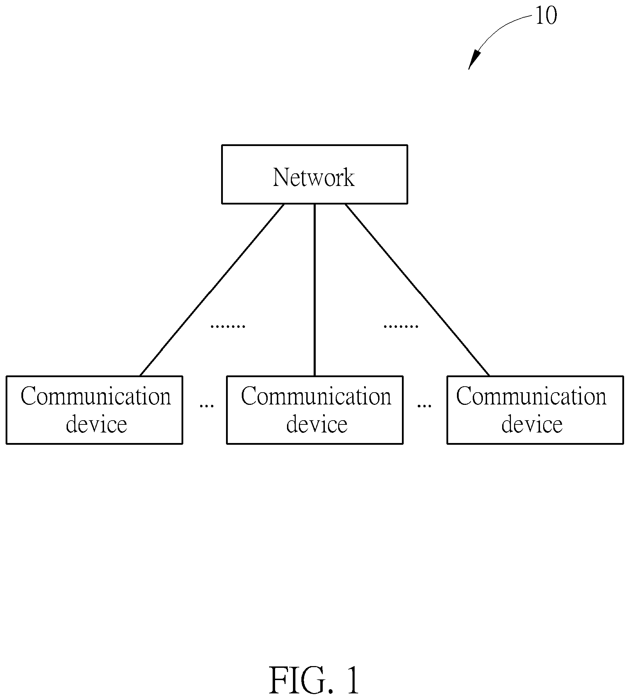

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. Practically, the network may be an evolved Node-B (eNB) in an evolved universal terrestrial radio access network (UTRAN) (E-UTRAN) of a long term evolution (LTE) system, or a fifth generation (5G) BS employing orthogonal frequency-division multiplexing (OFDM) and/or non-OFDM for communicating with the communication devices (e.g., transmitting/receiving a physical downlink (DL) control channel (PDCCH) and/or an enhanced PDCCH (EPDCCH), and encoding/decoding DL/uplink (UL) data according to an error control coding (ECC) scheme) in a system bandwidth (e.g., 20MHz) and/or a transmission time interval (TTI) (e.g., 1 ms).

The communication device may be a user equipment (UE), a mobile phone, a laptop, a tablet computer, an electronic book, a portable computer system, a vehicle or aircraft. In addition, the network and the communication device can be seen as a transmitter or a receiver according to transmission direction, e.g., for a UL, the communication device is the transmitter and the network is the receiver, and for a DL, the network is the transmitter and the communication device is the receiver.

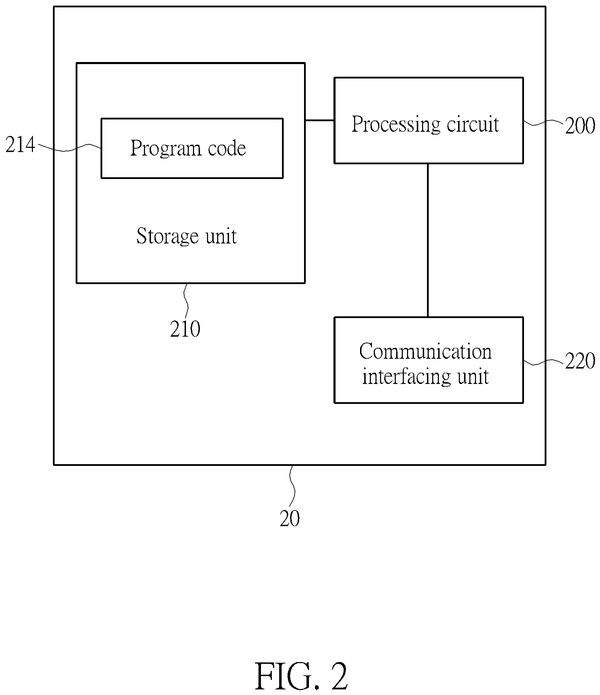

Fig. 2 is a schematic diagram of a communication device 20 according to an example of the present invention. The communication device 20 may be the communication device or the network shown in Fig. 1, but is not limited herein. The communication device 20 may include a processing circuit 200 such as a microprocessor or Application Specific Integrated Circuit (ASIC), a storage unit 210 and a communication interfacing unit 220. The storage unit 210 may be any data storage device that may store a program code 214, accessed and executed by the processing circuit 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing circuit 200.

In the following embodiments, a UE is used to represent the communication device in Fig. 1, to simplify the illustration of the embodiments.

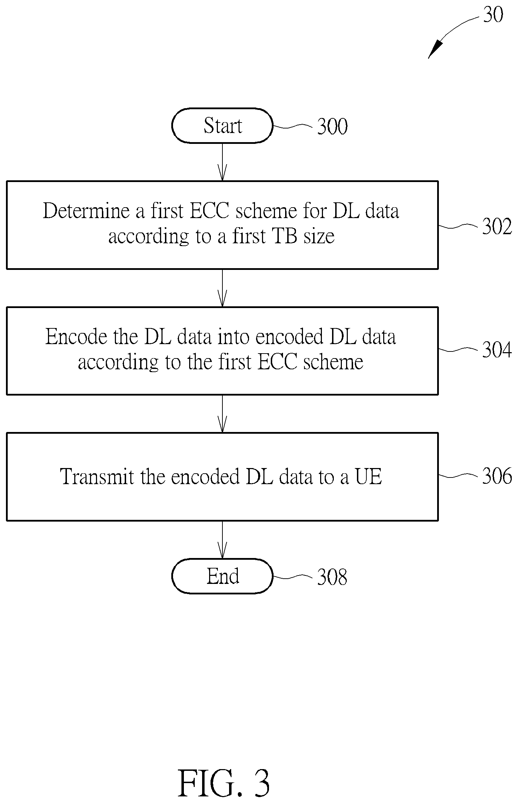

Fig. 3 is a flowchart of a process 30 according to an example of the present invention. The process 30 may be utilized in a network, to handle data transmission in a wireless communication system. The process 30 includes the following steps:
Step 300: Start.
Step 302: Determine a first ECC scheme for DL data according to a first transport block (TB) size.
Step 304: Encode the DL data into encoded DL data according to the first ECC scheme.
Step 306: Transmit the encoded DL data to a UE.
Step 308: End.

According to the process 30, the network may determine a first ECC scheme for DL data according to a first TB size. Then, the network may encode the DL data into encoded DL data according to (e.g., by using) the first ECC scheme. Further, the network may transmit the encoded DL data to a UE. That is, the first ECC scheme is determined (e.g., selected or switched) according to the first TB size, e.g., dynamically or adaptively. Thus, the first ECC scheme can be adapted to the first TB size properly according to the process 30. As a result, the problem of the data transmission in the prior art is solved.

Realization of the process 30 is not limited to the above description. The following examples may be applied for realizing the process 30.

In on example, the first ECC scheme may include at least one of a turbo coding scheme and a tail-biting convolutional coding (TBCC) scheme. In one example, the first ECC scheme may include at least one of a low density parity check (LDPC) code scheme and a polar code scheme, and is not limited herein.

In on example, information of the first ECC scheme may be transmitted (e.g., signaled) in (e.g., via) a bit field of DL control information (DCI) to the UE. That is, the network may transmit (e.g., signal) the information of the first ECC scheme to the UE (e.g., explicitly). Accordingly, the UE may determine the first ECC scheme according to the bit field of DCI and the first TB size.

In on example, the first TB size may be determined according to a size of the DL data. In on example, a threshold of the first TB size (e.g., 100 bits) may be predetermined and specified (e.g., newly defined) in the 3GPP standard. That is, the threshold may be already known by the network and the UE. In one example, the TBCC scheme may be used for encoding, if the first TB size is smaller than the threshold. In one example, the turbo coding scheme may be used for encoding, if the first TB size is larger (or not smaller) than the threshold.

In on example, the network may receive encoded UL data from the UE. In one example, the network may decode the encoded UL data according to a second ECC scheme. The first ECC scheme and the second ECC scheme may be the same or different.

In on example, the second ECC scheme may be determined by the network according to a second TB size of the encoded UL data. In one example, the TBCC scheme may be used for decoding, if the second TB size is smaller than 100 bits. In one example, the turbo coding scheme may be used for decoding, if the second TB size is larger (or not smaller) than 100 bits.

In one example, similar to the transmission of the information of the first ECC scheme, information of the second ECC scheme may be transmitted to the network, e.g., via a message. That is, the UE may transmit the information of the second ECC scheme to the network (e.g., explicitly). Accordingly, the network may determine the second ECC scheme according to the message and the second TB size of the encoded UL data.

In on example, the second TB size may be determined by the network according to at least one of a shortened subframe size, the number of resource blocks (e.g., allocated to the UE) in a frequency domain and an index for a modulation and coding scheme (MCS) of the encoded UL data.

In on example, the network may construct a lookup table for a plurality of TB sizes with a plurality of shortened subframe sizes, a plurality of number of resource blocks in the frequency domain and/or a plurality of indices for a plurality of MCS. That is, the network may determine the second TB size according to a relation between the second TB size and at least one of the shortened subframe size, the number of resource blocks in the frequency domain and an index for the MCS of the encoded UL data in the lookup table.

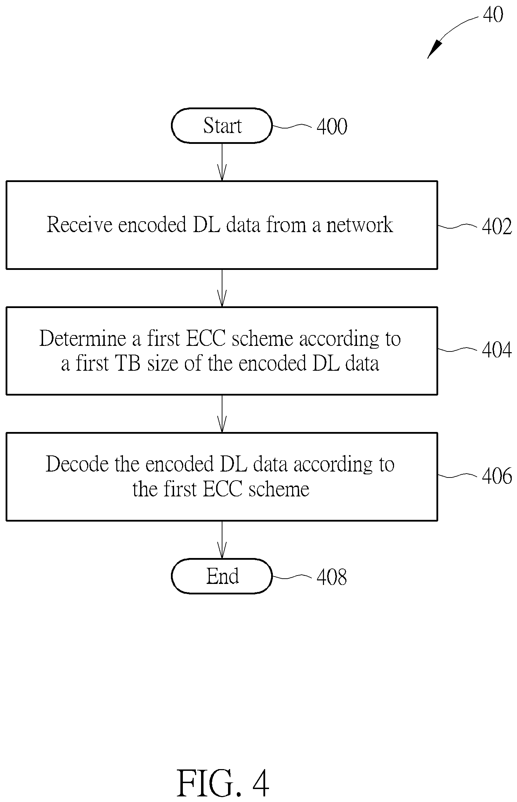

Fig. 4 is a flowchart of a process 40 according to an example of the present invention. The process 40 may be utilized in a UE, to handle data transmission in a wireless communication system. The process 40 includes the following steps:
Step 400: Start.
Step 402: Receive encoded DL data from a network.
Step 404: Determine a first ECC scheme according to a first TB size of the encoded DL data.
Step 406: Decode the encoded DL data according to the first ECC scheme.
Step 408: End.

According to the process 40, the UE may receive encoded DL data from a network. Then, the UE may determine a first ECC scheme according to a first TB size of the encoded DL data. Further, the UE may decode the encoded DL data according to (e.g., by using) the first ECC scheme. That is, the first ECC scheme is determined (e.g., selected or switched) according to the first TB size, e.g., dynamically or adaptively. Thus, the first ECC scheme can be adapted to the first TB size properly according to the process 40. As a result, the problem of the data transmission in the prior art is solved.

Realization of the process 40 is not limited to the above description. The following examples may be applied for realizing the process 40.

In on example, the first ECC scheme may include at least one of a turbo coding scheme and a TBCC scheme. In one example, the first ECC scheme may include at least one of a LDPC code scheme and a polar code scheme, and is not limited herein.

In on example, the UE may determine the first ECC scheme according to a first bit field of first DCI transmitted (e.g., signaled) by the network. Accordingly, the UE may determine the first ECC scheme according to the first bit field of first DCI and the first TB size of the encoded DL data.

In on example, the first TB size may be determined according to at least one of a shortened subframe size, the number of resource blocks (e.g., allocated to the UE) in a frequency domain and an index for a MCS in the first DCI transmitted by the network.

In on example, a threshold of the first TB size (e.g., 100 bits) may be predetermined and specified (e.g., newly defined) in the 3GPP standard. That is, the threshold may be already known by the network and the UE. In one example, the TBCC scheme may be used for encoding, if the first TB size is smaller than the threshold. In one example, the turbo coding scheme may be used for encoding, if the first TB size is larger (or not smaller) than the threshold.

In on example, the UE may decode the encoded DL data according to a blind decoding scheme. That is, there may be a plurality of candidate positions (e.g., time/frequency positions) of the encoded DL data, after the UE decodes the encoded DL data according to the first ECC scheme. The UE may need to decode (e.g., detect) all (or part of) the candidate positions blindly according to the blind decoding scheme, until at least one of the candidate positions is decoded successfully.

In on example, the UE may transmit encoded UL data encoded according to a second ECC scheme to the network. In on example, the second ECC scheme may be determined by the UE according to a second TB size of the encoded UL data. In on example, the second ECC scheme may be determined by the UE according to a second bit field of second DCI (e.g., in a UL grant) transmitted by the network. That is, the network may transmit (e.g., signal) the second ECC scheme to the UE (e.g., explicitly). Accordingly, the UE may determine the second ECC scheme according to the second bit field of second DCI and the second TB size of the encoded UL data.

In on example, the second TB size may be determined by the UE according to at least one of a shortened subframe size, the number of resource blocks in a frequency domain and an index for a MCS in the second DCI (e.g., a UL scheduling) transmitted by the network.

In on example, the UE may construct a lookup table for a plurality of TB sizes with a plurality of shortened subframe sizes, a plurality of number of resource blocks in the frequency domain and/or a plurality of indices for a plurality of MCS. That is, the network may determine the second TB size according to a relation between the second TB size and at least one of the shortened subframe size, the number of resource blocks in the frequency domain and an index for the MCS in the second DCI in the lookup table.

Examples are illustrated as follows according to the processes 30 and 40. A threshold for a TB size to switch between (e.g., select one of) a turbo coding scheme and a TBCC scheme is predetermined as 100 bits, and is specified (e.g., newly defined) in the 3GPP standard. That is, the TBCC scheme is used for encoding if the first TB size is smaller than 100 bits, while the turbo coding scheme is used for encoding if the first TB size is larger (or not smaller) than 100 bits. A network configures a shortened subframe size as 2 OFDM symbols to the UE. In one example, a TB size of DL data is 50 bits. Accordingly, the network determines a TBCC scheme for the DL data according to the threshold and the first TB size. Then, the network encodes the DL data into encoded DL data according to (e.g., by using) the TBCC scheme, and transmits the encoded DL data with DCI indicating the number of scheduled resource blocks and an index for a MCS to the UE. The UE receives the encoded DL data and the DCI from the network. Then, the UE determines the TBCC scheme according to the threshold and the first TB size of the encoded DL data, which is determined as 50 bits according to a predetermined relation between a shortened subframe size, the number of scheduled resource blocks, and an index of the MCS of the encoded DL data. Accordingly, the UE decodes the encoded DL data according to (e.g., by using) the TBCC scheme.

In another example, a TB size of DL data is 500 bits. Accordingly, the network determines a turbo coding scheme for the DL data according to the threshold and the first TB size. Then, the network encodes the DL data into encoded DL data according to (e.g., by using) the turbo coding scheme, and transmits the encoded DL data with DCI indicating the number of scheduled resource blocks and an index for a MCS to the UE. The UE receives the encoded DL data and the DCI from the network. Then, the UE determines the turbo coding scheme according to the threshold and the first TB size of the encoded DL data, which is determined as 500 bits according to a predetermined relation between a shortened subframe size, the number of scheduled resource blocks, and an index of the MCS of the encoded DL data. Accordingly, the UE decodes the encoded DL data according to (e.g., by using) the turbo coding scheme.

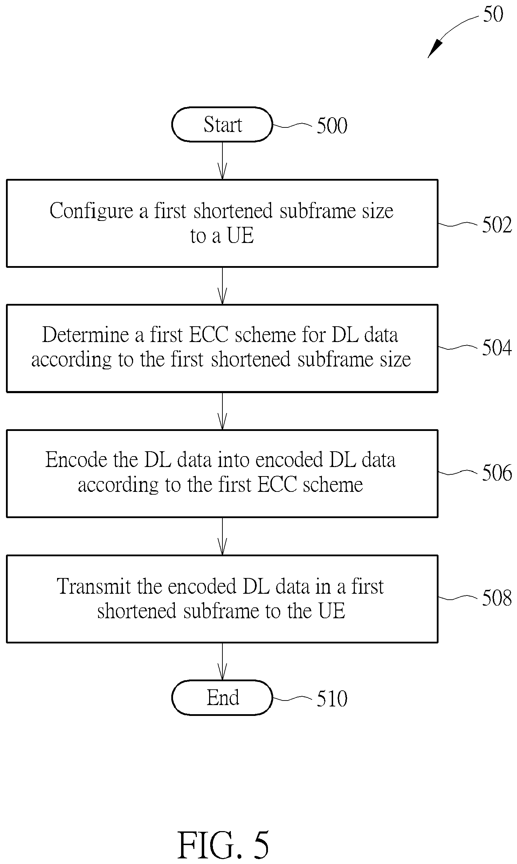

Fig. 5 is a flowchart of a process 50 according to an example of the present invention. The process 50 may be utilized in a network, to handle data transmission in a wireless communication system. The process 50 includes the following steps:
Step 500: Start.
Step 502: Configure a first shortened subframe size to a UE.
Step 504: Determine a first ECC scheme for DL data according to the first shortened subframe size.
Step 506: Encode the DL data into encoded DL data according to the first ECC scheme.
Step 508: Transmit the encoded DL data in a first shortened subframe to the UE.
Step 510: End.

According to the process 50, the network may configure a first shortened subframe size to a UE. Then, the network may determine a first ECC scheme for DL data according to the first shortened subframe size. Further, the network may encode the DL data into encoded DL data according to (e.g., by using) the first ECC scheme, and may transmit the encoded DL data in a first shortened subframe to the UE. That is, the first ECC scheme is determined (e.g., selected or switched) according to the first shortened subframe size, e.g., dynamically or adaptively. Thus, the first ECC scheme can be adapted to the first shortened subframe size properly according to the process 50. As a result, the problem of the data transmission in the prior art is solved.

Realization of the process 50 is not limited to the above description. The following examples may be applied for realizing the process 50.

In on example, the first ECC scheme may include at least one of a turbo coding scheme and a TBCC scheme. In one example, the first ECC scheme may include at least one of a LDPC code scheme and a polar code scheme, and is not limited herein.

In on example, information of the first ECC scheme may be transmitted (e.g., signaled) in (e.g., via) a bit field of DCI to the UE. That is, the network may transmit (e.g., signal) the information of the first ECC scheme to the UE (e.g., explicitly). Accordingly, the UE may determine the first ECC scheme according to the bit field of DCI and the first shortened subframe size configured by the network.

In on example, the network may receive encoded UL data in a second shortened subframe from the UE. In one example, the network may decode the encoded UL data according to a second ECC scheme. The first ECC scheme and the second ECC scheme may be the same or different.

In on example, the second ECC scheme may be determined by the network according to a second shortened subframe size of the encoded UL data. In one example, the TBCC scheme may be used for decoding, if the second shortened subframe size is configured as 1 or 2 OFDM symbol(s). In one example, the turbo coding scheme may be used for decoding, if the second shortened subframe size is configured as 3 (i.e., neither 1 nor 2) OFDM symbols.

In one example, similar to the transmission of the information of the first ECC scheme, information of the second ECC scheme may be transmitted to the network, e.g., via a message. That is, the UE may transmit the information of the second ECC scheme to the network (e.g., explicitly). Accordingly, the network may determine the second ECC scheme according to the message and the second shortened subframe size of the encoded UL data.

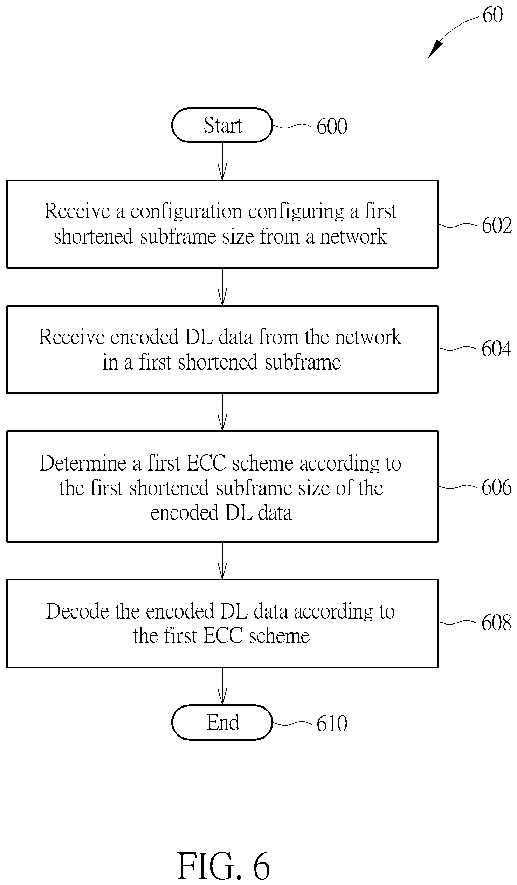

Fig. 6 is a flowchart of a process 60 according to an example of the present invention. The process 60 may be utilized in a UE, to handle data transmission in a wireless communication system. The process 60 includes the following steps:
Step 600: Start.
Step 602: Receive a configuration configuring a first shortened subframe size from a network.
Step 604: Receive encoded DL data from the network in a first shortened subframe.
Step 606: Determine a first ECC scheme according to the first shortened subframe size of the encoded DL data.
Step 608: Decode the encoded DL data according to the first ECC scheme.
Step 610: End.

According to the process 60, the UE may receive a configuration configuring a first shortened subframe size from a network. Then, the UE may receive encoded DL data from the network in a first shortened subframe. Further, the UE may determine a first ECC scheme according to the first shortened subframe size of the encoded DL data, and may decode the encoded DL data according to (e.g., by using) the first ECC scheme. That is, the first ECC scheme is determined (e.g., selected or switched) according to the first shortened subframe size, e.g., dynamically or adaptively. Thus, the first ECC scheme can be adapted to the first shortened subframe size properly according to the process 60. As a result, the problem of the data transmission in the prior art is solved.

Realization of the process 60 is not limited to the above description. The following examples may be applied for realizing the process 60.

In on example, the first ECC scheme may include at least one of a turbo coding scheme and a TBCC scheme. In one example, the first ECC scheme may include at least one of a LDPC code scheme and a polar code scheme, and is not limited herein.

In on example, the UE may determine the first ECC scheme according to a first bit field of first DCI transmitted (e.g., signaled) by the network. Accordingly, the UE may determine the first ECC scheme according to the first bit field of first DCI and the first shortened subframe size of the encoded DL data.

In on example, the UE may decode the encoded DL data according to a blind decoding scheme. That is, there may be a plurality of candidate positions (e.g., time/frequency positions) of the encoded DL data, after the UE decodes the encoded DL data according to the first ECC scheme. The UE may need to decode (e.g., detect) all (or part of) the candidate positions blindly according to the blind decoding scheme, until at least one of the candidate positions is decoded successfully.

In on example, the UE may transmit encoded UL data encoded according to a second ECC scheme in a second shortened subframe to the network. In on example, the second ECC scheme may be determined by the UE according to a second shortened subframe size of the encoded UL data. In on example, the second ECC scheme may be determined by the UE according to a second bit field of second DCI (e.g., in a UL grant) transmitted by the network. That is, the network may transmit (e.g., signal) the second ECC scheme to the UE (e.g., explicitly). Accordingly, the UE may determine the second ECC scheme according to the second bit field of second DCI and the second shortened subframe size of the encoded UL data.

Examples are illustrated as follows according to the processes 50 and 60. In one example, a network configures a shortened subframe size as 1 or 2 OFDM symbol(s) to the UE. Accordingly, the network determines a TBCC scheme for the DL data according to the shortened subframe size. Then, the network encodes the DL data into encoded DL data according to (e.g., by using) the TBCC scheme, and transmits the encoded DL data with DCI. The UE receives the encoded DL data and the DCI from the network. Then, the UE determines the TBCC scheme according to the shortened subframe size configured by the network. Accordingly, the UE decodes the encoded DL data according to (e.g., by using) the TBCC scheme. In another example, a network configures a shortened subframe size as 3 (i.e., neither 1 nor 2) OFDM symbols to the UE. Accordingly, the network determines a turbo coding scheme for the DL data according to the shortened subframe size. Then, the network encodes the DL data into encoded DL data according to (e.g., by using) the turbo coding scheme, and transmits the encoded DL data with DCI to the UE. The UE receives the encoded DL data and the DCI from the network. Then, the UE determines the turbo coding scheme according to the shortened subframe size configured by the network. Accordingly, the UE decodes the encoded DL data according to (e.g., by using) the turbo coding scheme.

It should be noted that "shortened subframe size" mentioned above may be termed as "shortened TTI length". Correspondingly, "shortened subframe" may also be termed as "shortened TTI". In addition, "shortened subframe size" mentioned above may be corresponded to "shortened subframe", and "shortened TTI length" may be corresponded to "shortened TTI".

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. Any of the abovementioned processes may be compiled into the program code 214. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means be the communication device 20.

To sum up, the present invention provides a method and related communication device for handling data transmission performed with a plurality of ECC schemes. Thus, the network and the UE can determine an ECC scheme according to a TB size or a shortened subframe size, e.g., dynamically or adaptively. As a result, the problem of handling the data transmission performed with the ECC schemes is solved.

## Claims

1. A network of handling data transmission, comprising:
a storage unit (210), for storing instructions; and
a processing circuit (200), coupled to the storage unit (210), wherein the storage unit (210) stores, and the processing circuit (200) is configured to execute, the instructions of:
determining a first error control coding, ECC, scheme for downlink, DL, data according to a first transport block, TB, size;
encoding the DL data into encoded DL data according to the first ECC scheme; and
transmitting the encoded DL data to a communication device.

2. The network of claim 1, wherein the first TB size is determined according to a size of the DL data.

3. The network of claim 1, wherein the storage unit (210) further stores, and the processing circuit (200) is further configured to execute, instructions of:
receiving encoded uplink, UL, data from the communication device; and
decoding the encoded UL data according to a second ECC scheme, wherein the second ECC scheme is determined by the network according to a second TB size of the encoded UL data.

4. The network of claim 3, wherein the second TB size is determined by the network according to at least one of a shortened subframe size, a number of resource blocks in a frequency domain and an index for a modulation and coding scheme, MCS, of the encoded UL data.

5. A communication device of handling data transmission, comprising:
a storage unit (210), for storing instructions; and
a processing circuit (200), coupled to the storage unit (210), wherein the storage unit (210) stores, and the processing circuit (200) is configured to execute, the instructions of:
receiving encoded downlink, DL, data from a network;
determining a first error control coding, ECC, scheme according to a first transport block, TB, size of the encoded DL data; and
decoding the encoded DL data according to the first ECC scheme.

6. The communication device of claim 5, wherein the first TB size is determined according to at least one of a shortened subframe size, a number of resource blocks in a frequency domain and an index for a modulation and coding scheme, MCS, in first DCI transmitted by the network.

7. The communication device of claim 5, wherein the storage unit (210) further stores, and the processing circuit (200) is is further configured to execute, an instruction of:
transmitting encoded UL data encoded according to a second ECC scheme to the network.

8. The communication device of claim 7, wherein the second ECC scheme is determined by the communication device according to a second bit field of second DCI transmitted by the network.

9. The communication device of claim 7, wherein the second ECC scheme is determined by the communication device according to a second TB size of the encoded UL data.

10. The communication device of claim 9, wherein the second TB size is determined by the communication device according to at least one of a shortened subframe size, the number of resource blocks in a frequency domain and an index for a MCS in second DCI transmitted by the network.

11. A network of handling data transmission, comprising:
a storage unit (210), for storing instructions; and
a processing circuit (200), coupled to the storage unit (210), wherein the storage unit (210) stores, and the processing circuit (200) is configured to execute, the instructions of:
configuring a first shortened subframe size to a communication device;
determining a first error control coding, ECC, scheme for downlink, DL, data according to the first shortened subframe size;
encoding the DL data into encoded DL data according to the first ECC scheme; and
transmitting the encoded DL data in a first shortened subframe to the communication device.

12. The network of claim 11, wherein the storage unit further stores the instructions of:
receiving encoded uplink, UL, data in a second shortened subframe from the communication device; and
decoding the encoded UL data according to a second ECC scheme, wherein the second ECC scheme is determined by the network according to a second shortened subframe size of the encoded UL data.

13. A communication device of handling data transmission, comprising:
a storage unit (210), for storing instructions; and
a processing circuit (200), coupled to the storage unit (210), wherein the storage unit (210) stores, and the processing circuit (200) is configured to execute, the instructions of:
receiving a configuration configuring a first shortened subframe size from a network;
receiving encoded downlink (DL) data from the network in a first shortened subframe;
determining a first error control coding (ECC) scheme according to the first shortened subframe size of the encoded DL data; and
decoding the encoded DL data according to the first ECC scheme.

14. The communication device of claim 13, wherein the storage unit (210) further stores, and the processing circuit (200) is further configured to execute, an instruction of:
transmitting encoded UL data encoded according to a second ECC scheme in a second shortened subframe to the network.

15. The communication device of claim 14, wherein the second ECC scheme is determined by the communication device according to a second shortened subframe size of the encoded UL data.
